(19) **Europäisches Patentamt / European Patent Office / Office européen des brevets**

(11) **EP 4 787 739 A1**

(12) **EUROPEAN PATENT APPLICATION**
published in accordance with Art. 153(4) EPC

(43) Date of publication:
05.08.2026 Bulletin 2026/32

(21) Application number: 23954283.0

(22) Date of filing: 28.09.2023

(51) International Patent Classification (IPC):
*H04B 10/516* (2013.01)

(52) Cooperative Patent Classification (CPC):
H04B 10/516

(86) International application number:
PCT/JP2023/035418

(87) International publication number:
WO 2025/069308 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: NTT, Inc.
Tokyo 100-8116 (JP)

(72) Inventors:
• NAKAMURA Masanori
Musashino-shi, Tokyo 180-8585 (JP)

• YAMAZAKI Hiroshi
Musashino-shi, Tokyo 180-8585 (JP)
• NAGATANI Munehiko
Musashino-shi, Tokyo 180-8585 (JP)
• HAMAOKA Fukutaro
Musashino-shi, Tokyo 180-8585 (JP)
• KOBAYASHI Takayuki
Musashino-shi, Tokyo 180-8585 (JP)
• MIYAMOTO Yutaka
Musashino-shi, Tokyo 180-8585 (JP)

(74) Representative: Santarelli
Tour Trinity
1 bis Place de la Défense
92400 Courbevoie (FR)

(54) **OPTICAL TRANSMITTER**

(57) An optical transmitter includes a wideband signal generation unit including a switch circuit that alternately selects a first narrowband signal and a second narrowband signal from the first narrowband signal and the second narrowband signal in synchronization with a clock signal, a frequency shifter that shifts a frequency of a third narrowband signal by a signal phase-shifted by 90 degrees with respect to a phase of the clock signal, and a first adder that adds a signal selected from the first narrowband signal and the second narrowband signal and the third narrowband signal whose frequency has been shifted. The wideband signal generation unit may further include an addition/subtraction circuit that updates the first narrowband signal by adding the second narrowband signal multiplied by a predetermined coefficient and the first narrowband signal, updates the second narrowband signal by subtracting the second narrowband signal multiplied by the predetermined coefficient from the first narrowband signal before update, and inputs the updated first narrowband signal and the updated second narrowband signal to the switch circuit.

Fig. 5

**Description**

Technical Field

The present invention relates to an optical transmitter.

Background Art

An increase in an amount of traffic of client signals in a backbone network of an optical communication system requires an increase in transmission capacity per channel. The optical communication system adopts a digital coherent optical transmission method using dual polarization-quadrature phase shift keying (DP-QPSK) as a modulation method in some cases. Fig. 25 of Patent Document 1 shows a configuration example of a wideband signal generation unit that generates a wideband analog signal in a bandwidth-doubler type optical transmitter.

Citation List

Patent Document

Patent Document 1: WO 2019/031447 A

Summary of Invention

Technical Problem

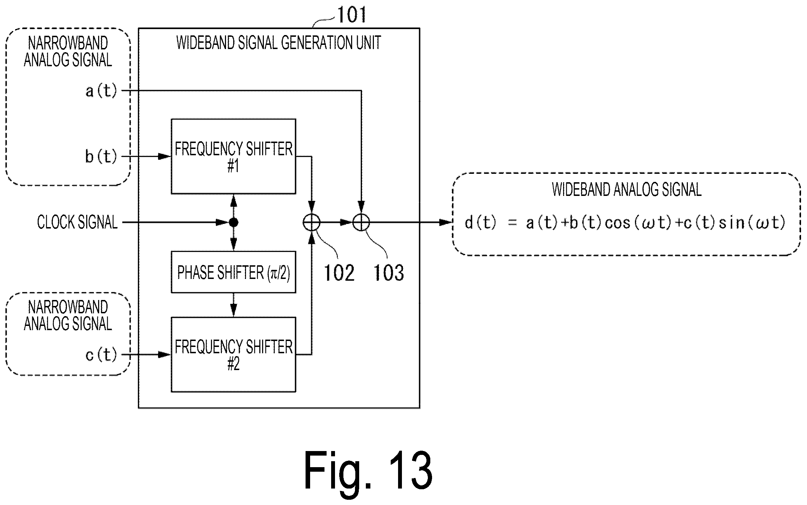

Fig. 13 shows a configuration example of a wideband signal generation unit 101. In an optical transmitter of an optical communication system, the wideband signal generation unit 101 generates a wideband analog signal on the basis of narrowband analog signals "a(t)", "b(t)", and "c(t)". The wideband signal generation unit 101 includes a frequency shifter "#1", a frequency shifter "#2", a phase shifter "($\pi$/2)", an adder 102 (wideband combiner circuit), and an adder 103 (wideband combiner circuit).

The adder 102 adds the narrowband analog signal output from the frequency shifter "#1" and the narrowband analog signal output from the frequency shifter "#2". The adder 103 adds the addition result by the adder 102 and the narrowband analog signal "a(t)". Therefore, a wideband analog signal is generated.

As described above, there is a problem that a wideband analog signal cannot be generated unless at least two adders that add a plurality of narrowband analog signals are provided in the wideband signal generation unit.

In view of the above circumstances, an object of the present invention is to provide an optical transmitter capable of generating a wideband analog signal even in a case where only one adder that adds a plurality of narrowband analog signals is provided in a wideband signal generation unit.

Solution to Problem

An aspect of the present invention is an optical transmitter including a wideband signal generation unit including a switch circuit that alternately selects a first narrowband signal and a second narrowband signal from the first narrowband signal and the second narrowband signal in synchronization with a clock signal, a frequency shifter that shifts a frequency of a third narrowband signal by a signal phase-shifted by 90 degrees with respect to a phase of the clock signal, and a first adder that adds a signal selected from the first narrowband signal and the second narrowband signal and the third narrowband signal whose frequency has been shifted.

Advantageous Effects of Invention

The present invention can generate a wideband analog signal even in a case where only one adder that adds a plurality of narrowband analog signals is provided in a wideband signal generation unit.

Brief Description of Drawings

[Fig. 1] A configuration example of an optical communication system in a first embodiment.
[Fig. 2] A configuration example of a wideband signal generation device in the first embodiment.

[Fig. 3] An example of signal processing of a band division unit in the first embodiment.

[Fig. 4] A configuration example of a narrowband signal processing unit in the first embodiment.

[Fig. 5] A configuration example of a wideband signal generation unit in the first embodiment.

[Fig. 6] An example of signal processing of a wideband signal generation unit in the first embodiment.

[Fig. 7] A configuration example of a switch circuit in a first modification of the first embodiment.

[Fig. 8] A configuration example of a frequency shifter in a second modification of the first embodiment.

[Fig. 9] A configuration example of a wideband signal generation unit in a second embodiment.

[Fig. 10] A configuration example of a narrowband signal processing unit in the second embodiment.

[Fig. 11] An example of signal processing of a wideband signal generation unit in the second embodiment.

[Fig. 12] A configuration example of an optical communication system in a third embodiment.

[Fig. 13] A configuration example of a wideband signal generation unit.

Description of Embodiments

Embodiments of the present invention will be described in detail with reference to the drawings.

(First Embodiment)

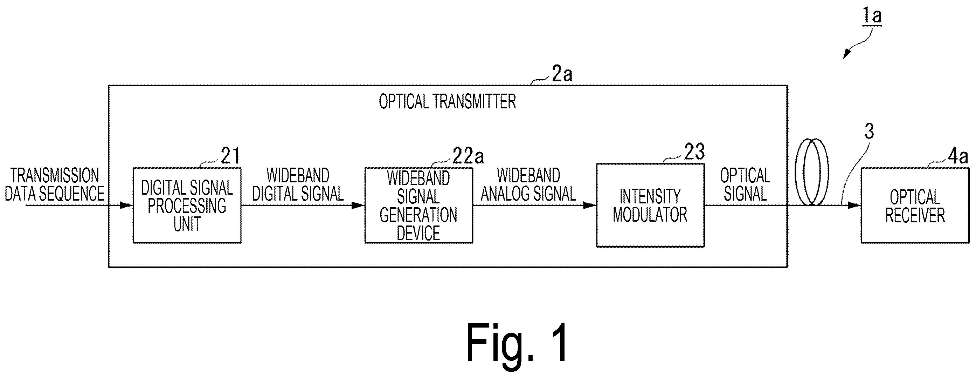

Fig. 1 shows a configuration example of an optical communication system 1a in a first embodiment. The optical communication system 1a includes an optical transmitter 2a, an optical transmission line 3, and an optical receiver 4a. The optical transmitter 2a includes a digital signal processing unit 21, a wideband signal generation device 22a, and an intensity modulator 23.

Some functions of the digital signal processing unit 21 and the wideband signal generation device 22a are implemented as software by a processor such as a central processing unit (CPU) executing a program stored in a storage unit including a nonvolatile recording medium (non-transitory recording medium). The program may be recorded in a computer-readable recording medium or may be recorded in the storage unit via a network. The computer-readable recording medium is, for example, a portable medium such as a flexible disk, a magneto-optical disc, a read only memory (ROM), or a compact disc read only memory (CD-ROM) or a non-transitory recording medium such as a storage device such as a hard disk or a solid state drive (SSD) built in a computer system.

Some functions of the digital signal processing unit 21 and the wideband signal generation device 22a may be implemented by using, for example, hardware (accelerator) including an electronic circuit (or circuitry) using a large scale integrated circuit (LSI), an application specific integrated circuit (ASIC), a programmable logic device (PLD), or a field programmable gate array (FPGA).

The optical transmitter 2a transmits an optical signal based on a transmission data sequence (binary information) to the optical receiver 4a via the optical transmission line 3. The digital signal processing unit 21 performs predetermined digital signal processing on the transmission data sequence, thereby generating a wideband digital signal. The digital signal processing unit 21 outputs the wideband digital signal (high-speed digital signal) to the wideband signal generation device 22a. The wideband signal generation device 22a generates a wideband analog signal (high-speed analog signal) on the basis of the wideband digital signal. The intensity modulator 23 performs intensity modulation on the wideband analog signal, thereby generating an optical signal. The intensity modulator 23 transmits the optical signal to the optical transmission line 3.

The optical transmission line 3 transmits an optical signal. The optical receiver 4a receives the transmitted optical signal. The optical receiver 4a generates a reception signal by performing predetermined reception processing on the received optical signal. The optical receiver 4a generates a reception data sequence (binary information) by performing predetermined demodulation processing on the reception signal.

Next, details of the wideband signal generation device 22a will be described.

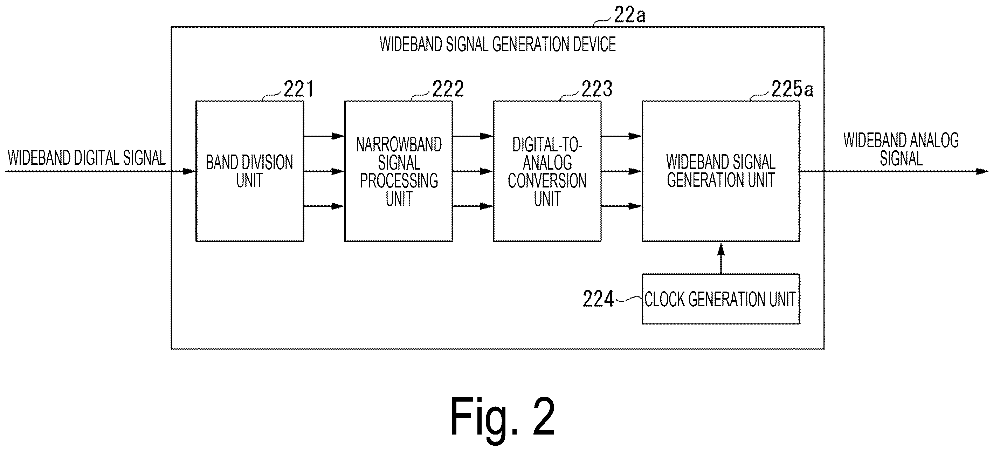

Fig. 2 shows a configuration example of the wideband signal generation device 22a in the first embodiment. The wideband signal generation device 22a includes a band division unit 221, a narrowband signal processing unit 222, a digital-to-analog conversion unit 223, a clock generation unit 224, and a wideband signal generation unit 225a.

The wideband digital signal is input to the band division unit 221 from the digital signal processing unit 21. The band division unit 221 divides the wideband digital signal for each band, thereby generating narrowband digital signals of a plurality of systems.

The narrowband signal processing unit 222 performs predetermined signal processing on the narrowband digital signals of the plurality of systems, thereby generating narrowband digital signals subjected to the signal processing for each system. The digital-to-analog conversion unit 223 converts (digital-to-analog conversion) the narrowband digital signals subjected to the signal processing into narrowband analog signals for each system. The clock generation unit 224 outputs a clock signal to the wideband signal generation unit 225a. The wideband signal generation unit 225a generates a wideband analog signal by combining the narrowband analog signals of the plurality of systems by using the clock signal.

**EP 4 787 739 A1**

Hereinafter, in mathematical equations, the symbol "f" represents a frequency of the clock signal. The symbol "$\omega$" represents an angular frequency (angular velocity) of the clock signal. The angular frequency "$\omega$" is equal to "2nf". The symbol "(.)*" represents a complex conjugate signal. The symbol "j" represents an imaginary unit. The symbol "r" represents a Fourier coefficient in a case where the clock signal is subjected to Fourier series expansion.

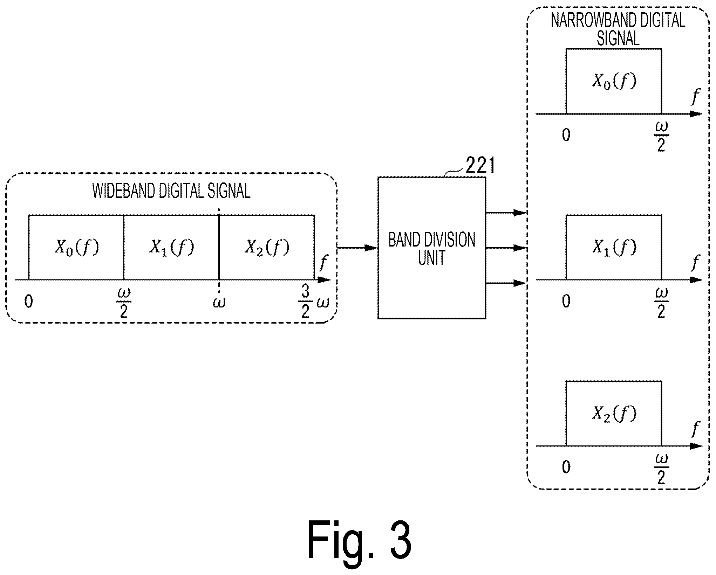

Fig. 3 shows an example of signal processing of the band division unit 221 in the first embodiment. In Fig. 3, the band division unit 221 divides the input wideband digital signal into a narrowband digital signal "$X_0(f)$", a narrowband digital signal" $X_1(f)$", and a narrowband digital signal "$X_2(f)$".

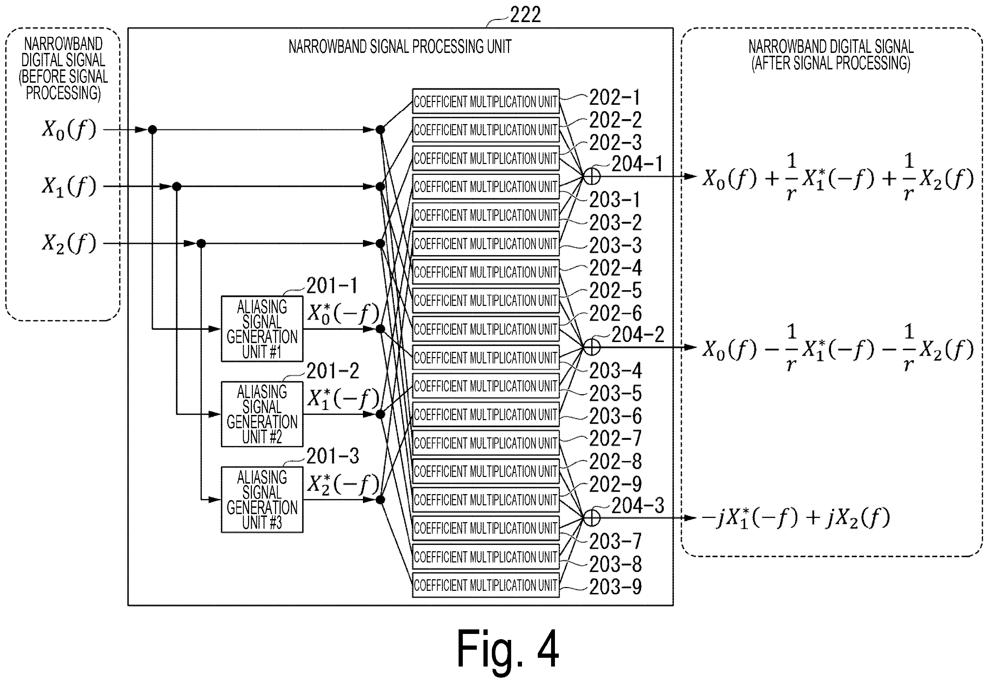

Fig. 4 shows a configuration example of the narrowband signal processing unit 222 in the first embodiment. The narrowband signal processing unit 222 includes three aliasing signal generation units 201, nine coefficient multiplication units 202, nine coefficient multiplication units 203, and three adders 204.

The aliasing signal generation unit 201-1 (first aliasing signal generation unit) folds a frequency of the narrowband digital signal "$X_0(f)$ " (first digital signal). The aliasing signal generation unit 201-2 (second aliasing signal generation unit) folds a frequency of the narrowband digital signal "$X_1(f)$" (second digital signal). The aliasing signal generation unit 201-3 (third aliasing signal generation unit) folds a frequency of the narrowband digital signal "$X_2(f)$" (third digital signal).

In a case where a non-ideal state (for example, imbalance, skew, and crosstalk) exists between narrowband analog signals in the digital-to-analog conversion unit 223 and the wideband signal generation unit 225a, a coefficient of each coefficient multiplication unit 202 is determined in advance such that a wideband analog signal of each system generated by the wideband signal generation unit 225a approaches each target waveform. Hereinafter, the coefficient of each coefficient multiplication unit 202 in a case where an ideal state exists between the narrowband analog signals in the digital-to-analog conversion unit 223 and the wideband signal generation unit 225a will be described.

The coefficient multiplication unit 202-1 (first coefficient multiplication unit) multiplies the narrowband digital signal "$X_0(f)$" by the coefficient "1" (first coefficient). The coefficient multiplication unit 202-2 (second coefficient multiplication unit) multiplies the narrowband digital signal "$X_1(f)$" by the coefficient "0" (second coefficient). The coefficient multiplication unit 202-3 (third coefficient multiplication unit) multiplies the narrowband digital signal "$X_2(f)$" by the coefficient "1/r" (third coefficient).

The coefficient multiplication unit 203-1 (fourth coefficient multiplication unit) multiplies a narrowband digital signal "$X_0^*(-f)$" having a folded frequency by the coefficient "0" (fourth coefficient). The coefficient multiplication unit 203-2 (fifth coefficient multiplication unit) multiplies a narrowband digital signal "$X_1^*(-f)$" having a folded frequency by the coefficient "1/r" (fifth coefficient). The coefficient multiplication unit 203-3 (sixth coefficient multiplication unit) multiplies a narrowband digital signal "$X_2^*(-f)$" having a folded frequency by the coefficient "0" (sixth coefficient).

The coefficient multiplication unit 202-4 (first coefficient multiplication unit) multiplies the narrowband digital signal "$X_0(f)$" by the coefficient "1". The coefficient multiplication unit 202-5 (second coefficient multiplication unit) multiplies the narrowband digital signal "$X_1(f)$" by the coefficient "0". The coefficient multiplication unit 202-6 (third coefficient multiplication unit) multiplies the narrowband digital signal "$X_2(f)$" by the coefficient "-1/r".

The coefficient multiplication unit 203-4 (fourth coefficient multiplication unit) multiplies the narrowband digital signal "$X_0^*(-f)$" having the folded frequency by the coefficient "0". The coefficient multiplication unit 203-5 (fifth coefficient multiplication unit) multiplies the narrowband digital signal "$X_1^*(-f)$" having the folded frequency by the coefficient "-1/r". The coefficient multiplication unit 203-6 (sixth coefficient multiplication unit) multiplies the narrowband digital signal "$X_2^*(-f)$" having the folded frequency by the coefficient "0".

The coefficient multiplication unit 202-7 (first coefficient multiplication unit) multiplies the narrowband digital signal "$X_0(f)$" by the coefficient "0". The coefficient multiplication unit 202-8 (second coefficient multiplication unit) multiplies the narrowband digital signal "$X_1(f)$" by the coefficient "0". The coefficient multiplication unit 202-9 (third coefficient multiplication unit) multiplies the narrowband digital signal "$X_2(f)$" by the coefficient "j".

The coefficient multiplication unit 203-7 (fourth coefficient multiplication unit) multiplies the narrowband digital signal "$X_0^*(-f)$" having the folded frequency by the coefficient "0". The coefficient multiplication unit 203-8 (fifth coefficient multiplication unit) multiplies the narrowband digital signal "$X_1^*(-f)$" having the folded frequency by the coefficient "-j". The coefficient multiplication unit 203-9 (sixth coefficient multiplication unit) multiplies the narrowband digital signal "$X_2^*(-f)$" having the folded frequency by the coefficient "0".

The adder 204-1 adds the narrowband digital signal "$X_0(f)$" multiplied by the coefficient "1", the narrowband digital signal "$X_1(f)$" multiplied by the coefficient "0", the narrowband digital signal "$X_2(f)$" multiplied by the coefficient "1/r", the narrowband digital signal "$X_0^*(-f)$" having the folded frequency and multiplied by the coefficient "0", the narrowband digital signal "$X_1^*(-f)$" having the folded frequency and multiplied by the coefficient "1/r", and the narrowband digital signal "$X_2^*(-f)$" having the folded frequency and multiplied by the coefficient "0".

In a case where a non-ideal state exists between the narrowband analog signals in the digital-to-analog conversion unit 223 and the wideband signal generation unit 225a, those coefficients are determined in advance such that the addition result by the adder 204-1 approaches a narrowband analog signal (target waveform) in Equation (1). [Math. 1]

4

$$X_0(f) + \frac{1}{r}X_1^*(-f) + \frac{1}{r}X_2(f) \qquad \cdots (1)$$

The adder 204-2 adds the narrowband digital signal "$X_0(f)$" multiplied by the coefficient "1", the narrowband digital signal "$X_1(f)$" multiplied by the coefficient "0", the narrowband digital signal "$X_2(f)$" multiplied by the coefficient "-1/r", the narrowband digital signal "$X_0^*(-f)$" having the folded frequency and multiplied by the coefficient "0", the narrowband digital signal "$X_1^*(-f)$" having the folded frequency and multiplied by the coefficient "-1/r", and the narrowband digital signal "$X_2^*(-f)$" having the folded frequency and multiplied by the coefficient "0".

In a case where a non-ideal state exists between the narrowband analog signals in the digital-to-analog conversion unit 223 and the wideband signal generation unit 225a, those coefficients are determined in advance such that the addition result by the adder 204-2 approaches a narrowband analog signal (target waveform) in Equation (2).
[Math. 2]

$$X_0(f) - \frac{1}{r}X_1^*(-f) - \frac{1}{r}X_2(f) \qquad \cdots (2)$$

The adder 204-3 adds the narrowband digital signal "$X_0(f)$" multiplied by the coefficient "0", the narrowband digital signal "$X_1(f)$" multiplied by the coefficient "0", the narrowband digital signal "$X_2(f)$" multiplied by the coefficient "j", the narrowband digital signal "$X_0^*(-f)$" having the folded frequency and multiplied by the coefficient "0", the narrowband digital signal "$X_1^*(-f)$" having the folded frequency and multiplied by the coefficient "-j", and the narrowband digital signal "$X_2^*(-f)$" having the folded frequency and multiplied by the coefficient "0".

In a case where a non-ideal state exists between the narrowband analog signals in the digital-to-analog conversion unit 223 and the wideband signal generation unit 225a, those coefficients are determined in advance such that the addition result by the adder 204-3 approaches a narrowband analog signal (target waveform) in Equation (3).
[Math. 3]

$$-jX_1^*(-f) + jX_2(f) \qquad \cdots (3)$$

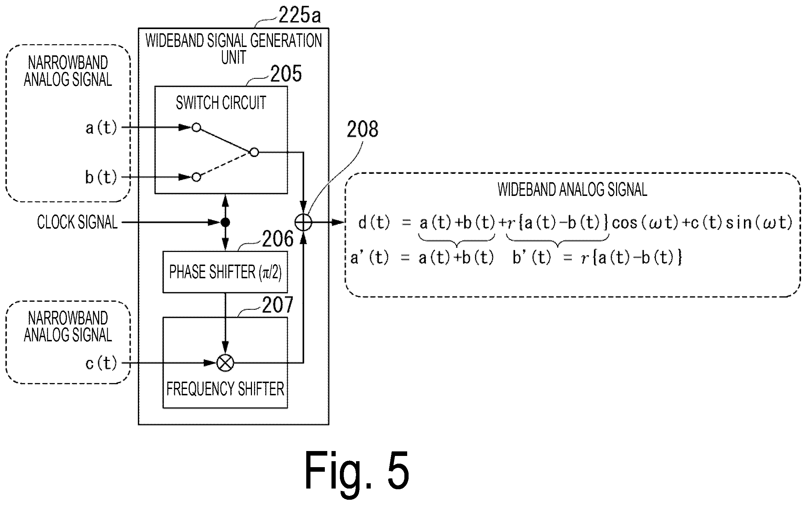

Fig. 5 shows a configuration example of the wideband signal generation unit 225a in the first embodiment. The wideband signal generation unit 225a includes a switch circuit 205, a phase shifter 206, a frequency shifter 207, and an adder 208.

A clock signal is input to the switch circuit 205 from the clock generation unit 224. The switch circuit 205 alternately selects a first narrowband signal and a second narrowband signal from the first narrowband analog signal "a(t)" and the second narrowband analog signal "b(t)" in synchronization with the clock signal.

The phase shifter 206 generates a signal phase-shifted by 90 degrees with respect to a phase of the clock signal. The frequency shifter 207 shifts a frequency of a third narrowband signal by the signal phase-shifted by 90 degrees with respect to the phase of the clock signal. That is, the frequency shifter 207 multiplies the third narrowband analog signal "c(t)" by the signal phase-shifted by 90 degrees with respect to the phase of the clock signal.

The adder 208 (first adder) adds narrowband analog signals of three systems. That is, the adder 208 adds a signal selected from the first narrowband analog signal and the second narrowband analog signal and the third narrowband analog signal whose frequency has been shifted. In Fig. 5, the addition result is expressed as "d(t) = a(t) + b(t) + r{a(t) - b(t)}cos(ωt) + c(t)sin(ωt)". Here, "a(t) + b(t)" may be expressed as "a' (t)". Further, "r{a(t) - b(t)}" may be expressed as "b' (t)".

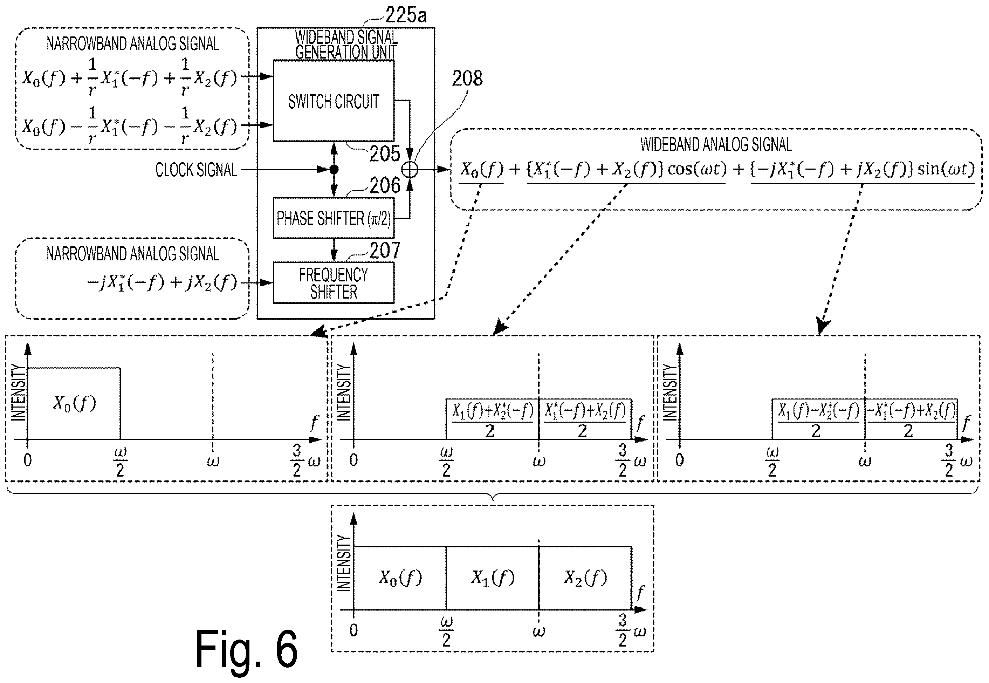

Fig. 6 shows an example of signal processing of the wideband signal generation unit 225a in the first embodiment. As an example, the frequency "ω" of the clock signal is twice the bandwidth "ω/2" of each narrowband analog signal input to the wideband signal generation unit 225a. That is, the frequency "ω" of the clock signal is twice the bandwidth "ω/2" of the first narrowband signal, the second narrowband signal, and the third narrowband signal. The bandwidth "3ω/2" of the wideband analog signal generated by the wideband signal generation unit 225a is three times the bandwidth "ω/2" of the narrowband analog signal.

The narrowband analog signal in Equation (1) and the narrowband analog signal in Equation (2) are input to the switch circuit 205. The coefficient "1/r" of those narrowband analog signals is canceled by the Fourier coefficient "r" of the clock signal input to the switch circuit 205. The narrowband analog signal in Equation (3) is input to the frequency shifter 207. The adder 208 outputs a wideband analog signal in Equation (4) to the intensity modulator 23.
[Math. 4]

$$X_0(f) + \{X_1^*(-f) + X_2(f)\}\cos(\omega t) + \{-jX_1^*(-f) + jX_2(f)\}\sin(\omega t)$$

$$\cdots (4)$$

Here, Equations (5) and (6) are established.
[Math. 5]

$$\cos(\omega t) = \frac{e^{j\omega t} + e^{-j\omega t}}{2} \qquad \cdots (5)$$

[Math. 6]

$$\sin(\omega t) = \frac{e^{j\omega t} - e^{-j\omega t}}{2j} \qquad \cdots (6)$$

Therefore, the intensity of a spectral component modulated with the sine wave "sin(wt)" or the cosine wave "cos($\omega$t)" is 1/2 times.

As described above, the switch circuit 205 alternately selects the first narrowband signal and the second narrowband signal from the first narrowband signal "a(t)" and the second narrowband signal "b(t)" in synchronization with the clock signal. The frequency shifter 207 shifts the frequency of the third narrowband signal "c(t)" by the signal phase-shifted by 90 degrees with respect to the phase of the clock signal. The adder 208 (first adder) adds a signal selected from the first narrowband signal and the second narrowband signal and the third narrowband signal whose frequency has been shifted. The adder 208 outputs the addition result "d(t)" to the intensity modulator 23.

Therefore, even in a case where only one adder 208 (wideband adder) that adds a plurality of narrowband analog signals (narrowband analog signals of three systems) is provided in the wideband signal generation unit 225a, a wideband analog signal can be generated.

(First Modification)

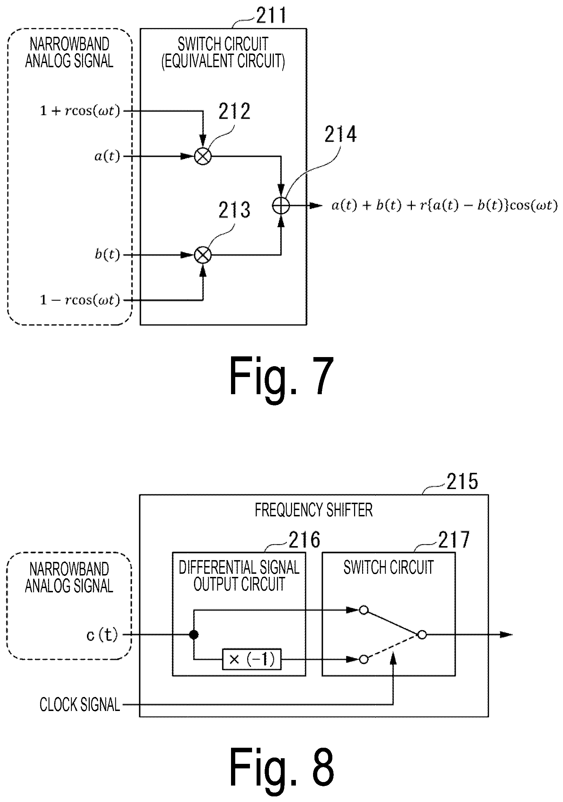

Fig. 7 shows a configuration example of a switch circuit 211 (equivalent circuit of the switch circuit) in a first modification of the first embodiment. The switch circuit 211 is provided in the wideband signal generation unit 225a instead of the switch circuit 205 in Fig. 5. The switch circuit 211 includes a multiplier 212, a multiplier 213, and an adder 214.

In Fig. 7, a switching operation using a clock signal is subjected to Fourier series expansion. High-order components are ignored. The multiplier 212 multiplies the narrowband analog signal "a(t)" by a narrowband analog signal "1 + rcos($\omega$t)". The multiplier 213 multiplies the narrowband analog signal "b(t)" by a narrowband analog signal "1 - rcos(wt)". In a case where a waveform of the clock signal is a rectangular wave, the Fourier coefficient "r" is 4/$\pi$. In a case where the waveform of the clock signal is a sine wave, the Fourier coefficient "r" is 1. The adder 214 outputs a narrowband analog signal "a(t) + b(t) + r{a(t) - b(t)}cos($\omega$t)" to the adder 208.

(Second Modification)

Fig. 8 shows a configuration example of a frequency shifter 215 in a second modification of the first embodiment. The frequency shifter 215 is provided in the wideband signal generation unit 225a instead of the frequency shifter 207 in Fig. 5. The frequency shifter 215 includes a differential signal output circuit 216 and a switch circuit 217.

The differential signal output circuit 216 outputs the narrowband analog signal "c(t)" and the narrowband analog signal "c(t)" multiplied by the coefficient "-1" to the switch circuit 217. That is, the differential signal output circuit 216 outputs the narrowband analog signal "c(t)" and the narrowband analog signal "c(t)" having an inverted polarity (sign) to the switch circuit 217.

The switch circuit 217 selects an analog signal from the narrowband analog signal "c(t)" and the narrowband analog signal "c(t)" multiplied by the coefficient "-1" in synchronization with the clock signal. The switch circuit 217 outputs the selected analog signal to the adder 208.

(Second Embodiment)

A second embodiment is mainly different from the first embodiment in that an addition/subtraction circuit is provided in the wideband signal generation unit. In the second embodiment, differences from the first embodiment will be mainly described.

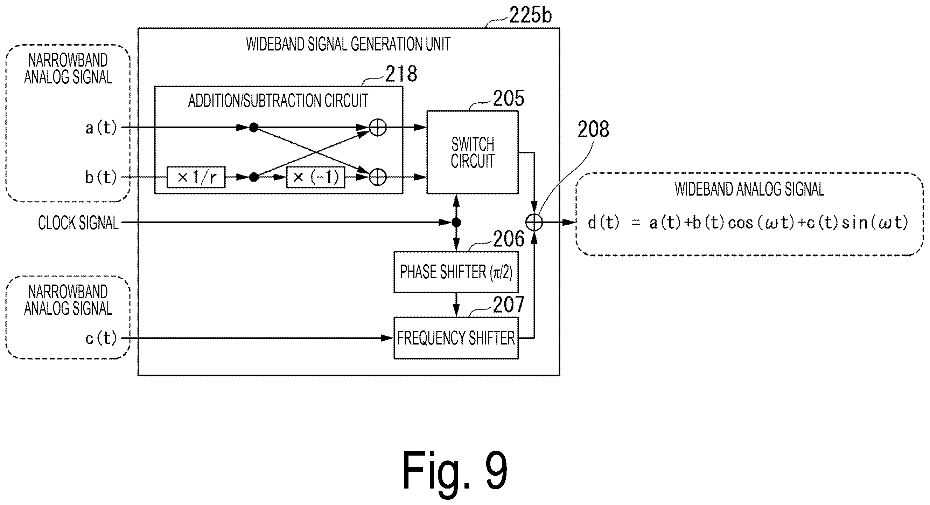

Fig. 9 shows a configuration example of a wideband signal generation unit 225b in the second embodiment. The wideband signal generation unit 225b includes the switch circuit 205, the phase shifter 206, the frequency shifter 207, the adder 208, and an addition/subtraction circuit 218.

The narrowband analog signal "a(t)" and the narrowband analog signal "b(t)" are input to the addition/subtraction circuit 218. The addition/subtraction circuit 218 performs some functions of the narrowband signal processing unit 222. That is, the addition/subtraction circuit 218 updates the narrowband analog signal by adding the narrowband analog signal "b(t)" multiplied by the predetermined coefficient "1/r" and the narrowband analog signal "a(t)". The addition/subtraction circuit 218 inputs the updated narrowband analog signal "a(t) + b(t)/r" to the switch circuit 205. The addition/subtraction circuit 218 updates the narrowband analog signal by adding the narrowband analog signal "b(t)" multiplied by the predetermined coefficient "-1/r" and the narrowband analog signal "a(t)". The addition/subtraction circuit 218 inputs the updated narrowband analog signal "a(t) - b(t)/r" to the switch circuit 205.

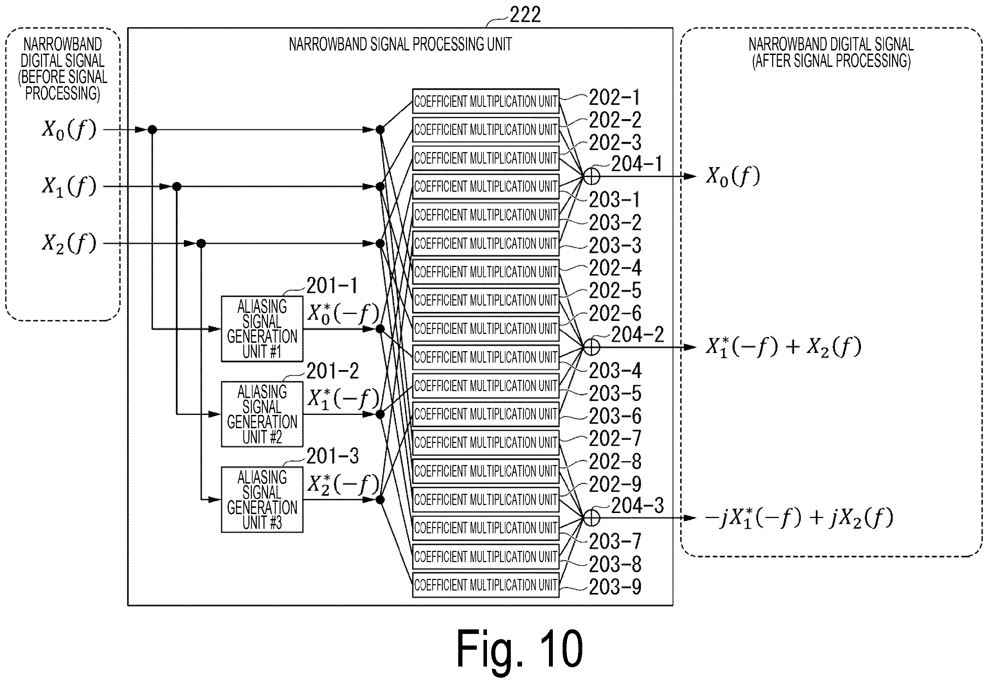

Fig. 10 shows a configuration example of the narrowband signal processing unit 222 in the second embodiment. The narrowband signal processing unit 222 includes three aliasing signal generation units 201, nine coefficient multiplication units 202, nine coefficient multiplication units 203, and three adders 204 (second adder).

In a case where a non-ideal state (for example, imbalance, skew, and crosstalk) exists between narrowband analog signals in the digital-to-analog conversion unit 223 and the wideband signal generation unit 225b, the coefficient of each coefficient multiplication unit 202 is determined in advance such that a wideband analog signal of each system generated by the wideband signal generation unit 225b approaches each target waveform. Hereinafter, the coefficient of each coefficient multiplication unit 202 in a case where an ideal state exists between the narrowband analog signals in the digital-to-analog conversion unit 223 and the wideband signal generation unit 225b will be described.

The coefficient multiplication unit 202-1 multiplies the narrowband digital signal "$X_0(f)$" by the coefficient "1". The coefficient multiplication unit 202-2 multiplies the narrowband digital signal "$X_1(f)$" by the coefficient "0". The coefficient multiplication unit 202-3 multiplies the narrowband digital signal "$X_2(f)$" by the coefficient "0".

The coefficient multiplication unit 203-1 multiplies the narrowband digital signal "$X_0^*(-f)$" having the folded frequency by the coefficient "0". The coefficient multiplication unit 203-2 multiplies the narrowband digital signal "$X_1^*(-f)$" having the folded frequency by the coefficient "0". The coefficient multiplication unit 203-3 multiplies the narrowband digital signal "$X_2^*(-f)$" having the folded frequency by the coefficient "0".

The coefficient multiplication unit 202-4 multiplies the narrowband digital signal "$X_0(f)$" by the coefficient "1". The coefficient multiplication unit 202-5 multiplies the narrowband digital signal "$X_1(f)$" by the coefficient "0". The coefficient multiplication unit 202-6 multiplies the narrowband digital signal "$X_2(f)$" by the coefficient "1".

The coefficient multiplication unit 203-4 multiplies the narrowband digital signal "$X_0^*(-f)$" having the folded frequency by the coefficient "0". The coefficient multiplication unit 203-5 multiplies the narrowband digital signal "$X_1^*(-f)$" having the folded frequency by the coefficient "1". The coefficient multiplication unit 203-6 multiplies the narrowband digital signal "$X_2^*(-f)$" having the folded frequency by the coefficient "0".

The coefficient multiplication unit 202-7 multiplies the narrowband digital signal "$X_0(f)$" by the coefficient "0". The coefficient multiplication unit 202-8 multiplies the narrowband digital signal "$X_1(f)$" by the coefficient "0". The coefficient multiplication unit 202-9 multiplies the narrowband digital signal "$X_2(f)$" by the coefficient "j".

The coefficient multiplication unit 203-7 multiplies the narrowband digital signal "$X_0^*(-f)$" having the folded frequency by the coefficient "0". The coefficient multiplication unit 203-8 multiplies the narrowband digital signal "$X_1^*(-f)$" having the folded frequency by the coefficient "-j". The coefficient multiplication unit 203-9 multiplies the narrowband digital signal "$X_2^*(-f)$" having the folded frequency by the coefficient "0".

The adder 204-1 adds the narrowband digital signal "$X_0(f)$" multiplied by the coefficient "1", the narrowband digital signal "$X_1(f)$" multiplied by the coefficient "0", the narrowband digital signal "$X_2(f)$" multiplied by the coefficient "0", the narrowband digital signal "$X_0^*(-f)$" having the folded frequency and multiplied by the coefficient "0", the narrowband digital signal "$X_1^*(-f)$" having the folded frequency and multiplied by the coefficient "0", and the narrowband digital signal "$X_2^*(-f)$" having the folded frequency and multiplied by the coefficient "0".

In a case where a non-ideal state exists between the narrowband analog signals in the digital-to-analog conversion unit 223 and the wideband signal generation unit 225b, those coefficients are determined in advance such that the addition result by the adder 204-1 approaches a narrowband analog signal (target waveform) in Equation (7).

[Math. 7]

$$X_0(f) \qquad \cdots (7)$$

The adder 204-2 adds the narrowband digital signal "$X_0(f)$" multiplied by the coefficient "1", the narrowband digital signal "$X_1(f)$" multiplied by the coefficient "0", the narrowband digital signal "$X_2(f)$" multiplied by the coefficient "1", the narrowband digital signal "$X_0^*(-f)$" having the folded frequency and multiplied by the coefficient "0", the narrowband digital signal "$X_1^*(-f)$" having the folded frequency and multiplied by the coefficient "1", and the narrowband digital signal "$X_2^*(-f)$" having the folded frequency and multiplied by the coefficient "0".

In a case where a non-ideal state exists between the narrowband analog signals in the digital-to-analog conversion unit 223 and the wideband signal generation unit 225b, those coefficients are determined in advance such that the addition result by the adder 204-2 approaches a narrowband analog signal (target waveform) in Equation (8).
[Math. 8]

$$X_1^*(-f) + X_2(f) \qquad \cdots (8)$$

The adder 204-3 adds the narrowband digital signal "$X_0(f)$" multiplied by the coefficient "0", the narrowband digital signal "$X_1(f)$" multiplied by the coefficient "0", the narrowband digital signal "$X_2(f)$" multiplied by the coefficient "j", the narrowband digital signal "$X_0^*(-f)$" having the folded frequency and multiplied by the coefficient "0", the narrowband digital signal "$X_1^*(-f)$" having the folded frequency and multiplied by the coefficient "-j", and the narrowband digital signal "$X_2^*(-f)$" having the folded frequency and multiplied by the coefficient "0".

In a case where a non-ideal state exists between the narrowband analog signals in the digital-to-analog conversion unit 223 and the wideband signal generation unit 225b, those coefficients are determined in advance such that the addition result by the adder 204-3 approaches a narrowband analog signal (target waveform) in Equation (9).
[Math. 9]

$$-jX_1^*(-f) + jX_2(f) \qquad \cdots (9)$$

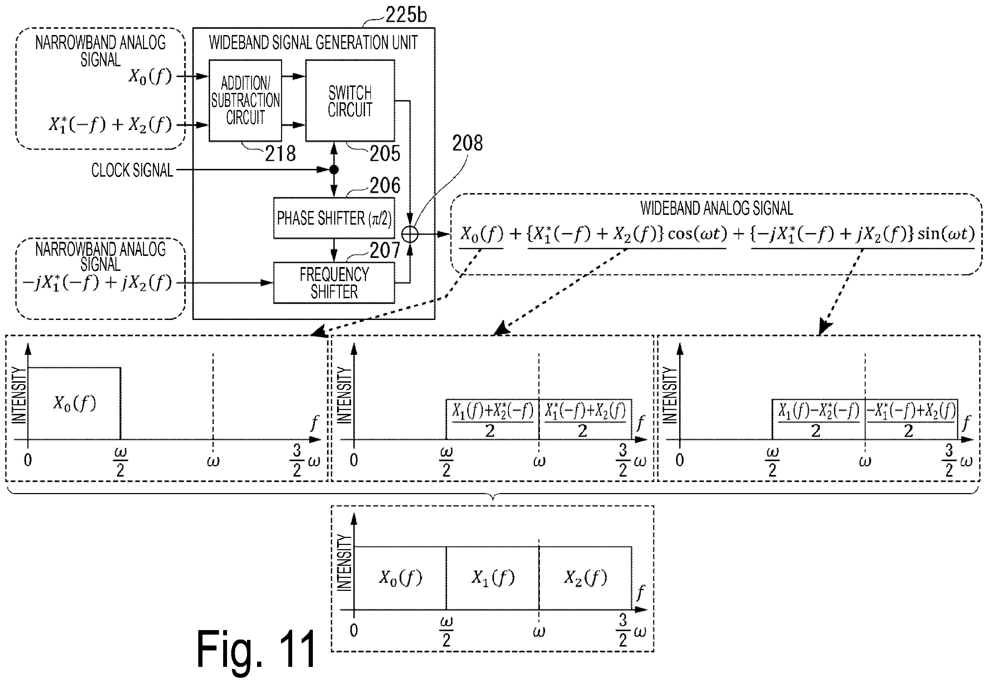

Fig. 11 shows an example of signal processing of the wideband signal generation unit 225b in the second embodiment. As an example, the frequency "$\omega$" of the clock signal is twice the bandwidth "$\omega/2$" of each narrowband analog signal input to the wideband signal generation unit 225b. That is, the frequency "$\omega$" of the clock signal is twice the bandwidth "$\omega/2$" of the first narrowband signal, the second narrowband signal, and the third narrowband signal. The bandwidth "$3\omega/2$" of the wideband analog signal generated by the wideband signal generation unit 225b is three times the bandwidth "$\omega/2$" of the narrowband analog signal.

The narrowband analog signal in Equation (7) and the narrowband analog signal in Equation (8) are input to the addition/subtraction circuit 218. The narrowband analog signal in Equation (9) is input to the frequency shifter 207. The adder 208 outputs a wideband analog signal in Equation (10) to the intensity modulator 23.
[Math. 10]

$$X_0(f) + \{X_1^*(-f) + X_2(f)\}\cos(\omega t) + \{-jX_1^*(-f) + jX_2(f)\}\sin(\omega t)$$

$$\cdots (10)$$

Here, Equations (5) and (6) above are established. Therefore, the intensity of a spectral component modulated with the sine wave "$\sin(\omega t)$" or the cosine wave "$\cos(wt)$" is 1/2 times.

As described above, the addition/subtraction circuit 218 updates the first narrowband signal "a(t)" by adding the second narrowband signal "b(t)" multiplied by the predetermined coefficient "1/r" and the first narrowband signal "a(t)". The addition/subtraction circuit 218 updates the second narrowband signal "b(t)" by subtracting the second narrowband signal "b(t)" multiplied by the predetermined coefficient "1/r" from the first narrowband signal "a(t)". The addition/subtraction circuit 218 inputs the updated first narrowband signal and second narrowband signal to the switch circuit 205.

Therefore, even in a case where only one adder (wideband adder) that adds a plurality of narrowband analog signals is provided in the wideband signal generation unit, a wideband analog signal can be generated.

(Third Embodiment)

A third embodiment is mainly different from the first embodiment and the second embodiment in that an optical transmitter includes an IQ modulator that performs quadrature modulation (complex modulation). In the third embodiment, differences from the first embodiment and the second embodiment will be mainly described.

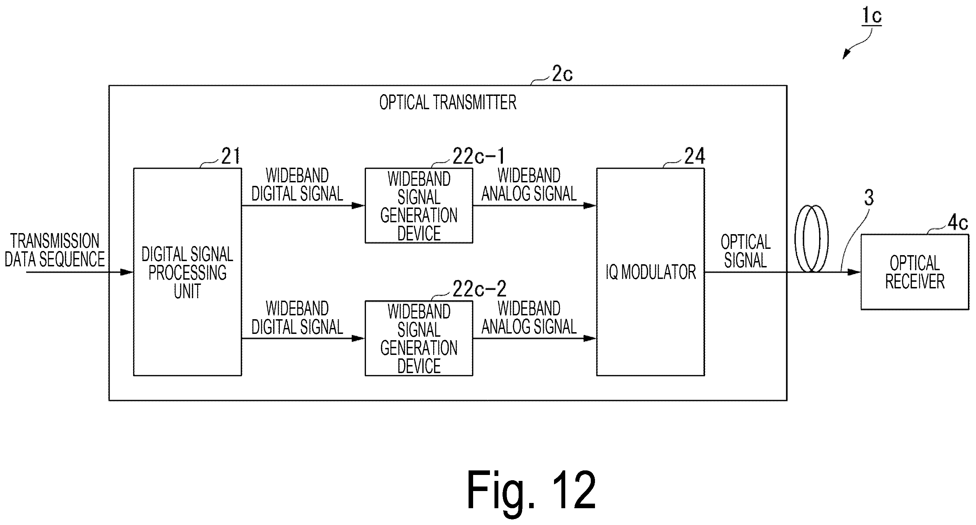

Fig. 12 shows a configuration example of an optical communication system 1c in the third embodiment. The optical communication system 1c includes an optical transmitter 2c, the optical transmission line 3, and the optical receiver 4a. The optical transmitter 2c includes the digital signal processing unit 21, two wideband signal generation devices 22c, and an IQ modulator 24.

The digital signal processing unit 21 performs predetermined digital signal processing on the transmission data sequence, thereby generating a wideband digital signal. The digital signal processing unit 21 outputs an in-phase wideband digital signal to the wideband signal generation device 22c-1. The digital signal processing unit 21 outputs a quadrature wideband digital signal to the wideband signal generation device 22c-2.

The wideband signal generation device 22c-1 outputs an in-phase wideband analog signal "I(t)" to the IQ modulator 24. The wideband signal generation device 22c-2 outputs a quadrature wideband analog signal "Q(t)" to the IQ modulator 24.

The IQ modulator 24 performs quadrature modulation (complex modulation) on the in-phase wideband analog signal "I(t)" and the quadrature wideband analog signal "Q(t)", thereby generating an optical signal. The IQ modulator 24 transmits the optical signal to the optical transmission line 3.

As described above, in the wideband signal generation device 22c-1, the switch circuit 205 alternately selects the first narrowband signal and the second narrowband signal from the first narrowband signal "a(t)" and the second narrowband signal "b(t)" in synchronization with the clock signal. The frequency shifter 207 shifts the frequency of the third narrowband signal "c(t)" by the signal phase-shifted by 90 degrees with respect to the phase of the clock signal. The adder 208 adds a signal selected from the first narrowband signal and the second narrowband signal and the third narrowband signal whose frequency has been shifted. The adder 208 outputs the addition result "d(t)" to the IQ modulator 24. The same applies to the wideband signal generation device 22c-2.

Therefore, even in a case where only one adder (wideband adder) that adds a plurality of narrowband analog signals is provided in the wideband signal generation unit, a wideband analog signal can be generated.

Although the embodiments of the present invention have been described in detail with reference to the drawings, specific configurations are not limited to the embodiments, and include design and the like within the scope of the present invention without departing from the gist of the present invention.

Industrial Applicability

The present invention can be applied to an optical communication system.

Reference Signs List

| | |
|---|---|
| 1a, 1c | Optical communication system |
| 2a, 2c | Optical transmitter |
| 3 | Optical transmission line |
| 4a, 4c | Optical receiver |
| 21 | Digital signal processing unit |
| 22a, 22c | Wideband signal generation device |
| 23 | Intensity modulator |
| 24 | IQ modulator |
| 101 | Wideband signal generation unit |
| 102 | Adder |
| 103 | Adder |
| 201 | Aliasing signal generation unit |
| 202 | Coefficient multiplication unit |
| 203 | Coefficient multiplication unit |
| 204 | Adder |
| 205 | Switch circuit |
| 206 | Phase shifter |
| 207 | Frequency shifter |
| 208 | Adder |
| 211 | Switch circuit |
| 212 | Multiplier |
| 213 | Multiplier |
| 214 | Adder |
| 215 | Frequency shifter |
| 216 | Differential signal output circuit |

| 217 | Switch circuit |
|---|---|
| 218 | Addition/subtraction circuit |
| 221 | Band division unit |
| 222 | Narrowband signal processing unit |
| 223 | Digital-to-analog conversion unit |
| 224 | Clock generation unit |
| 225a, 225b | Wideband signal generation unit |

**Claims**

1. An optical transmitter comprising

   a wideband signal generation unit including
   a switch circuit that alternately selects a first narrowband signal and a second narrowband signal from the first narrowband signal and the second narrowband signal in synchronization with a clock signal,
   a frequency shifter that shifts a frequency of a third narrowband signal by a signal phase-shifted by 90 degrees with respect to a phase of the clock signal, and
   a first adder that adds a signal selected from the first narrowband signal and the second narrowband signal and the third narrowband signal whose frequency has been shifted.

2. The optical transmitter according to claim 1, wherein a frequency of the clock signal is twice a bandwidth of each of the first, second, and third narrowband signals.

3. The optical transmitter according to claim 1, wherein

   the wideband signal generation unit further includes
   an addition/subtraction circuit that updates the first narrowband signal by adding the second narrowband signal multiplied by a predetermined coefficient and the first narrowband signal, updates the second narrowband signal by subtracting the second narrowband signal multiplied by the predetermined coefficient from the first narrowband signal before update, and inputs the updated first narrowband signal and the updated second narrowband signal to the switch circuit.

4. The optical transmitter according to any one of claims 1 to 3, further comprising:

   a narrowband signal processing unit including
   a first aliasing signal generation unit that generates a first aliasing signal by folding a frequency of a first digital signal,
   a second aliasing signal generation unit that generates a second aliasing signal by folding a frequency of a second digital signal,
   a third aliasing signal generation unit that generates a third aliasing signal by folding a frequency of a third digital signal,
   a first coefficient multiplication unit that multiplies the first digital signal having a frequency before folding by a first coefficient,
   a second coefficient multiplication unit that multiplies the second digital signal having a frequency before folding by a second coefficient,
   a third coefficient multiplication unit that multiplies the third digital signal having a frequency before folding by a third coefficient,
   a fourth coefficient multiplication unit that multiplies the first aliasing signal by a fourth coefficient,
   a fifth coefficient multiplication unit that multiplies the second aliasing signal by a fifth coefficient,
   a sixth coefficient multiplication unit that multiplies the third aliasing signal by a sixth coefficient, and
   a second adder that adds the first digital signal multiplied by the first coefficient, the second digital signal multiplied by the second coefficient, the third digital signal multiplied by the third coefficient, the first aliasing signal multiplied by the fourth coefficient, the second aliasing signal multiplied by the fifth coefficient, and the third aliasing signal multiplied by the sixth coefficient; and
   a digital-to-analog conversion unit that generates the first narrowband signal, the second narrowband signal, and the third narrowband signal by performing digital-to-analog conversion on a result of the addition by the second adder.

**Fig. 1**

1a

TRANSMISSION DATA SEQUENCE

OPTICAL TRANSMITTER — 2a

21 — DIGITAL SIGNAL PROCESSING UNIT

WIDEBAND DIGITAL SIGNAL

22a — WIDEBAND SIGNAL GENERATION DEVICE

WIDEBAND ANALOG SIGNAL

23 — INTENSITY MODULATOR

OPTICAL SIGNAL

3

4a — OPTICAL RECEIVER

Fig. 2

NARROWBAND DIGITAL SIGNAL

$X_0(f)$

$X_1(f)$

$X_2(f)$

$\frac{\omega}{2}$

$0$

$f$

221

BAND DIVISION UNIT

WIDEBAND DIGITAL SIGNAL

$X_0(f)$  $X_1(f)$  $X_2(f)$

$0$  $\frac{\omega}{2}$  $\omega$  $\frac{3}{2}\omega$

$f$

Fig. 3

Fig. 4

EP 4 787 739 A1

Fig. 5

Fig. 6

211

NARROWBAND
ANALOG SIGNAL

SWITCH CIRCUIT
(EQUIVALENT CIRCUIT)

212

$1 + r\cos(\omega t)$

$a(t)$

214

213

$b(t)$

$1 - r\cos(\omega t)$

$a(t) + b(t) + r\{a(t) - b(t)\}\cos(\omega t)$

# Fig. 7

215

FREQUENCY SHIFTER

216

217

NARROWBAND
ANALOG SIGNAL

DIFFERENTIAL SIGNAL
OUTPUT CIRCUIT

SWITCH CIRCUIT

c (t)

× (−1)

CLOCK SIGNAL

# Fig. 8

Fig. 9

Fig. 10

Fig. 11

EP 4 787 739 A1

Fig. 12

EP 4 787 739 A1

Fig. 13

## INTERNATIONAL SEARCH REPORT

| International application No. |
|---|
| **PCT/JP2023/035418** |

**A.  CLASSIFICATION OF SUBJECT MATTER**

*H04B 10/516*(2013.01)i
FI:   H04B10/516

According to International Patent Classification (IPC) or to both national classification and IPC

**B.  FIELDS SEARCHED**

Minimum documentation searched (classification system followed by classification symbols)

H04B10/516

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | WO 2019/031447 A1 (NIPPON TELEGRAPH AND TELEPHONE CORPORATION) 14 February 2019 (2019-02-14) paragraphs [0073]-[0076], fig. 13 | 1 |
| A | | 2-4 |
| A | YAMAZAKI, H. et al., Digital-Preprocessed Analog-Multiplexed DAC for Ultrawideband Multilevel Transmitter, JOURNAL OF LIGHTWAVE TECHNOLOGY, 2016.04, vol. 34, no. 7, pages 1579-1584 entire text, all drawings | 1-4 |
| A | WO 2017/033446 A1 (NIPPON TELEGRAPH AND TELEPHONE CORPORATION) 02 March 2017 (2017-03-02) entire text, all drawings | 1-4 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2023** | **12 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 787 739 A1**

**INTERNATIONAL SEARCH REPORT**
**Information on patent family members**

International application No.

**PCT/JP2023/035418**

| Patent document cited in search report | | | Publication date (day/month/year) | Patent family member(s) | | | Publication date (day/month/year) |
|---|---|---|---|---|---|---|---|
| WO | 2019/031447 | A1 | 14 February 2019 | US | 2020/0162167 | A1 | |
| | | | | paragraphs [0134]-[0138], fig. 13 | | | |
| | | | | EP | 3648377 | A1 | |
| | | | | CN | 110915151 | A | |
| WO | 2017/033446 | A1 | 02 March 2017 | US | 2018/0191369 | A1 | |
| | | | | entire text, all drawings | | | |
| | | | | EP | 3343778 | A1 | |
| | | | | CA | 2996399 | A1 | |
| | | | | CN | 107925416 | A | |

Form PCT/ISA/210 (patent family annex) (January 2015)

## REFERENCES CITED IN THE DESCRIPTION

**Patent documents cited in the description**

- WO 2019031447 A